# EUROPEAN PATENT APPLICATION

(11) **EP 4 535 313 A1**
(43) Date of publication of application: **09.04.2025**
(21) Application number: 24202593.0
(22) Date of filing: 25.09.2024
(51) Int. Cl.: G07D 7/12, G07D 7/121, G07D 7/17, G07D 7/20, G07D 11/22

(54) **SCANNER USING OPTICAL POSITIONING TRACKING**

(30) Priority: 29.09.2023 US 202318374831
(71) Applicant: NCR Corporation, Atlanta, GA 30308-1007 (US)
(72) Inventor: VETTRAINO, Peter Roy, Fife, DD6 8EE (GB)
(74) Representative: Secerna LLP

(57) **Abstract**

A valuable media item scanner is provided. The scanner includes a printed circuit board (PCB), an infeed slot, connected to a tube, and the tube further connected to an outfeed slot. The PCB is connected to optical tracking sensors situated along the tube and two contact image sensors (CISs) opposing one another on opposite sides of the tube. The PCB further includes a processor that executes firmware causing the processor to perform operations to dynamically assemble a final front surface image and a final back surface image of the media item as the media item is passed through the infeed slot into the tube and out the outfeed slot by using movement data provided by the optical tracking sensors and using image frames provided by the CISs.

## Description

### Background

Media handling devices, such as automated teller machines (ATMs) have a variety of different modules for a variety of functions. Several modules are required to read, and process checks inserted through a media infeed onto a media transport and urged past cameras to capture a frontside image of the check and a backside image of the check. Controlling precise movements of the check within the modules can require many complicated and sensitive electromechanical components. A damaged check can cause media jams as can checks that are smaller or larger than components are configured to handle. These components require a significant amount of space within the media handling device, which is one of the reasons the physical footprint of media handling devices is difficult to reduce.

### Summary

In various embodiments, a system, a scanner, and a method for reading valuable media are presented. In an embodiment, a valuable media scanner is presented. The valuable media scanner includes a printed circuit board (PCB) with microcontroller, an infeed slot, at least two optical tracking sensor connected to the PCB, a front camera connected to the PCB, and a back camera connected to the PCB. The microcontroller receives horizontal and vertical movement measurements for a media item passing through the infeed slot from the optical tracking sensors. The microcontroller also receives front and back images for front and back portions of the media item from the cameras when the media item is passed between the cameras within the infeed slot. The microcontroller assembles a complete front image and a complete back image of the media item using the movement measurements reported by the optical tracking sensors to calculate lateral horizontal and vertical displacement and angles of the media item for each captured image frame to reassemble the front image and the back image of the media item.

According to a first aspect of the present invention there is provided a valuable media item scanner, comprising:
a printed circuit board (PCB) comprising a processor and firmware executed by the processor;
optical tracking sensors connected to the PCB;
contact image sensors (CISs) connected to the PCB; and
the firmware when executed by the processor cause the processor to perform operations comprising:
   dynamically assembling a front surface image and a back surface image of a media item passed through a tube using image frames provided from the CISs along with media item movement data provided by the optical tracking sensors; and
   providing the front surface image and the back surface image to a media handling device for a media operation being processed on a transaction terminal associated with the media item.

Aptly, the valuable media item scanner further comprising:
a housing to encase or to include the PCB, the optical tracking sensors, and the CISs within the housing, wherein the housing further includes a media infeed slot connected to the tube, and a media outfeed slot connected to the tube.

Aptly, the CISs include a first CIS and a second CIS situated on opposing sides of the tube to define a scanline within the tube.

Aptly, the optical tracking sensors include a first pair of optical tracking sensors, the first pair horizontally aligned and situated vertically above the scanline along the tube.

Aptly, optical tracking sensors include a second pair of optical tracking sensors, the second pair vertically aligned and situated under the first pair and the second pair situated vertically below the scanline along the tube.

Aptly, the housing is approximately 20mm deep, 60 mm high, and 108mm wide.

Aptly, the media item movement data includes lateral x, y, and rotational yaw data for the media item.

Aptly, the firmware associated with the dynamically assembling further includes simultaneously dynamically assembling the front surface image and the back surface image.

Aptly, the firmware associated with the dynamically assembling further includes assembling each portion of the front surface image and each portion of the back surface image within a memory buffer of the PCB.

Aptly, the firmware associated with the providing further includes deskewing the front surface image and the back surface image from the memory buffer and provide a deskewed front surface image and a deskewed back surface image for the media item to the media handling device.

According to a second aspect of the present invention there is provided a transaction terminal, comprising:
a media handling device comprising a valuable media item scanner;
the valuable media item scanner comprising:
   a processor,
   optical tracking sensors; and
   contact image sensors (CISs);
   wherein the processor is configured to use movement data obtained from the optical tracking sensors for a media item passing through a tube and image frames obtained from the CISs of the media item passing through the tube to dynamically assemble a final front surface image and a final back surface image of the media item, and wherein the processor is further configured to provide the final front surface image and the final back surface image of the media item to the media handling device during a media operation being processed by the transaction terminal.

Aptly, the processor is further configured to modify the final front surface image and the final back surface image before providing to the media handling device by processing one or more of deskewing operations and image quality adjustment operations on the final front surface image and the final back surface image.

Aptly, processor is further configured to process optical character recognition (OCR) operations on the final front surface image and provide media item details obtained from the OCR operations to the media handling device.

Aptly, the processor is further configured to process magnetic ink character recognition (MICR) operations on the final front surface image and provide MICR data obtained from the MICR operations to the media handling device.

Aptly, media item scanner further includes an infeed slot to receive the media item and outfeed slot to eject the media item, wherein the infeed slot is connected to a first end of the tube and the outfeed slot is connected to a second end of the tube, wherein a customer associated with the media operation inserts a leading edge of the media item into the infeed slot and pushes the media item through the tube out the outfeed slot.

Aptly, media item scanner lacks any electromechanical components to control and to urge the media item through the tube.

Aptly, the CISs include a first CIS and a second CIS, the first CIS is situated on a first side of the tube and the second CIS is situated on a second and opposing side of the tube.

Aptly, the transaction terminal is an automated teller machine, a point-of-sale terminal, or a self-service terminal.

According to a third aspect of the present invention there is provided a method of operating a valuable media item scanner, comprising:
receiving movement data for a media item pushed through a tube of the valuable media item scanner by a customer, wherein the movement data is received from optical tracking sensors situated along the tube;
receiving front image frames from a front contact image sensor (CIS) situated along the tube and back image frames from a back CIS as portions of the media item pass between the front CIS and the back CIS while being pushed by the customer through the tube;
using the movement data to dynamically assemble the front image frames into a final front surface image of the media item and to dynamically assemble the back image frames into a final back surface image of the media item; and
providing the final front surface image and the final back surface image to a media handling device for processing a media operation associated with the media item on a transaction terminal.

Aptly, further includes modifying the final front surface image and the final back surface image by processing deskewing or image quality adjustment operations on the final front surface image and the final back surface image before providing the final front surface image and the final back surface image to the media handling device.

### Brief Description of the Drawings

FIG. 1 is a diagram of a valuable media scanner, according to an example embodiment.
FIG. 2 is a diagram of a front view of a valuable media item passing over a scanline of the valuable media scanner, according to an example embodiment.
FIG. 3 is a diagram of side view of the valuable media item passing between a front and a back camera of the scanline for the valuable media scanner, according to an example embodiment.
FIG. 4 is a diagram illustrating movements of the valuable media item passing over the scanline of the valuable media scanner with reconstruction of image frames captured for the valuable media item into a complete and final image of the valuable media item, according to an example embodiment.
FIG. 5 is a diagram of a system or a transaction terminal that includes a valuable media handling device with the valuable media scanner, according to an example embodiment.
FIG. 6 is a diagram of a method for operating the valuable media scanner, according to an example embodiment.

### Detailed Description

The demand for check scanning is still extremely high and increasing, with the US seeing over 16 billion check payments in 2021 Further, check legislation requires capturing banks to warrant their check images such that any scanned check image must accurately represent all information on the front and back of the check. The rules for image exchange generally include warranties related to image quality and usability. Therefore, the existing check scanners use a mechanism to remove the check from the users control so that it can be accurately aligned and scanned in a controlled manner so that the image meets required check image quality. This mechanism makes the modules bulky and difficult to integrate into media handling devices due to fascia interface and cabinet space volume limitations and the mechanism also increases module costs. For example, a simple module for scanning individual checks can cost approximately $1,500 and can require a space volume of 460mm x 162mm x 126mm. The complex mechanism also introduces the risk of checks jamming, reducing up-time of the media terminal, and increasing service calls. Mechanical slippage in the transport rollers can cause non-uniform motion of the check causing irregular image warping distortion along the horizontal axis. Temporary removal of the check from the user's control can introduce other issues such as: failure to return the check to the user, risk of damage to the check, risk of the user forgetting to take the check upon completion of the transaction, and increased exposure to security threats such as check trapping and theft.

Alternative proposed solutions that have the user hold the check in front of a 2d/3D camera experience significant performance and quality challenges in real-world environments. These performance and quality challenges include limited resolution and image quality that may not meet dots per inch (DPI) and image quality requirements of current legislation and standards. For example, a 225mm wide check at the 200 DPI resolution required by existing standards equates to a cropped check image that needs to be 1772 pixels wide, so a very high-resolution image camera would be required. Another challenge includes the user's fingers obscuring some of the edge of the check, no edge can be covered by more than 2.54mm. In another case, the real-world environments often have highly variable lighting, shadowing, and backlighting make it difficult to effectively read the check details from a captured image. Also, light can shine through a rear of the check causing a false ghost image or image noise. The users are also required to move the check around and user's ability to properly follow instructions can vary widely. Furthermore, these alternate solutions can only image one side of the check at a time.

The above referenced issues associated with current check scanners are addressed and solved by the valuable media scanner provided herein. The valuable media scanner has lower cost and reduced physical footprint from that which is associated with conventional check scanners. Additionally, a quality of the images provided by the valuable media scanner is improved from that is available with conventional scanners.

The valuable media scanner includes low cost optical tracking sensors (e.g., image tracking sensor typically used in optical computer mice, or laser speckle pattern sensors) to track the lateral x (horizontal) and y (vertical) movements continuously and precisely and track rotational "yaw" movement of the check as it passes over a scanline CIS (contact image sensor). Each scan line's image data is computationally transposed using the delta x, y, and yaw reported from the optical tracking sensors to recreate an accurate front image and back image of a valuable media item.

As used herein, a "valuable media item" includes a check, a ticket of value, a chit of value, a certificate of value, etc. In an embodiment, the valuable media item is a check such that "media item" and "check" can be used interchangeably and synonymously herein and below.

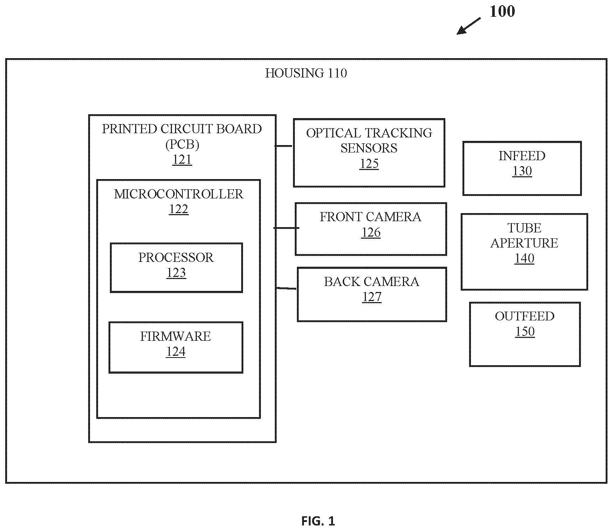

FIG. 1 is a diagram of a valuable media scanner 100 (hereinafter just "scanner 100"), according to an example embodiment. The scanner is showed in simplified form with just those components necessary to comprehending embodiments presented herein illustrated. Notable, fewer, or more components can be present with departing from the teachings provided herein.

The scanner 100 includes a housing 110, a printed circuit board (PCB) 121, an infeed aperture 130 (hereinafter just "infeed 130"), a tube aperture 140 (hereinafter just tube 140"), and an outfeed aperture 150 (hereinafter just "outfeed 150"). The PCB 121 includes a microcontroller 122, which includes a processor and firmware executed by the processor to perform the operations discussed herein and below. The PCB is also connected to at least two optical tracking sensors 125, a front camera 126, and a back camera 127.

The housing 110 encases and encloses the PCB 121, the optical tracking sensors 125 and the cameras 126 and 127. The infeed 130 is adapted to receive a valuable media item into the tube 140 and the outfeed 150. Collectively, the infeed 130, tube 140, and outfeed 150 represent a transport tube or transport path that a valuable media item travels when inserted by a customer through the scanner housing 110, via the infeed 130, and back out, via the outfeed 150, to a customer. The infeed 130 or infeed slot 130 is connected on a first end of the tube 140 and a second end of the tube 140 is connected to the outfeed 150 or outfeed slot 150. Media items inserted through the infeed 130 exit out of the outfeed 150. In an embodiment, the tube 140 is slightly curved at its ends to connect with infeed 130 on one end and connect with outfeed 150 on another end, but the tube 140 itself is substantially straight behind the infeed 130 and the outfeed 150.

In an embodiment, both the front camera 126 and the back camera 127 are 1 pixel contact image sensors (CISs). Use of the terms "front" and "back" are relative terms just to indicate the two cameras 126 and 127 oppose one another along the transport path such that when a valuable media item is passed through the tube 140 a front side or first side of the media item contacts a first one of the cameras and simultaneously a backside or second side of the media item makes contacts a second one of the cameras.

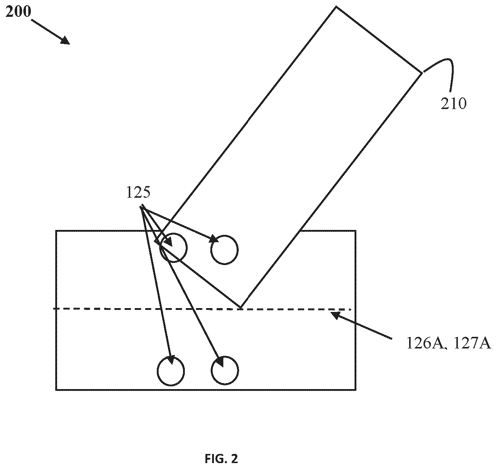

The optical tracking sensors 125 (hereinafter just "tracking sensors 125") do not have to be located on opposing sides of tube 140 because x (horizontal), y (vertical), and yaw are calculated the same for the front side of the media item as it would be for the backside of the media item. Consequently, the tracking sensors 125 are horizontally aligned in pairs. When there is only 1 pair of tracking sensors 125, each sensor 125 is horizontally aligned with the other sensor 125 and situated vertically above the scanline for the cameras 126 and 127. When there are 2 pairs of tracking sensors 125, a first pair is horizontally aligned and situated vertically above the scanline and the second pair is horizontally aligned and situated vertically below the scanline, each sensor 125 in one pair is vertically aligned with a corresponding sensor in the other pair. This is illustrated in FIG. 2 discussed below.

The tracking sensors 125 measure change in position of a media item transported through tube 140 by acquiring sequential surface images (image frames) and mathematically determining the direction and magnitude of media item movement. The tracking sensors 125 track x and y movement between successive frames at high accuracy and speed. For example, the PAW3370-DM-T4QU sensor tracks at accuracies up to 0.0013mm (19000 cpi (characters per inch)), with media speeds up to 10.6 m/s (400 ips (inches per second)), with a specified resolution error of only 0.5% at 5.08 m/s (200 ips) at 3000 cpi. In perspective, a 200 ips media speed equates to pulling a maximum length check (225mm) through the scanner 100 in 0.04 seconds. The sensors 125 provide the lateral x and y displacement as two easy read values over a serial bus (e.g., serial peripheral interface (SPI)) to microcontroller 122. This allows the measurements to be easily read by low cost microcontrollers or digital signal processors (DSPs). The 19000 cpi is approximately 100 times higher than the 200 ppi (pixels per inch) required by legislation and industry standards for final check images.

By using at least two tracking sensors 125 located a known distance apart from one another, the processor 123 executing the firmware 124 is able to continuously calculate the delta yaw occurring between successive scanlines as the media item/check passes through the cameras 126 and 127 within the tube 140. Assuming a pitch between the sensors 125, for example 20mm and a conservative tracking resolution of 0.0127mm (2000 cpi), then the delta in yaw angle is calculated by processor 123 using firmware 124 to 0.0364 degree steps. Over a maximum width check (e.g., 108mm), this equates to a distance of 0.068mm which is 1.87 times less than the pixel pitch of the final check image.

Firmware 124 causes processor 123 to perform operations, which continuously and precisely tracks the media item movement through the scanline of the tube 140 and builds an accurate scan or final image of the media item/check even if the customer randomly moves the check back and forth through the scanline while also randomly moving the check left to right and randomly skewing the check left to right. Scanner 100 does not require any mechanism to control the movement of the check from initial insertion into the infeed to receipt of the check via the outfeed 150. As a result, scanner 100 is a small straight-through scanner only slightly larger than the infeed slot. That is, because of the small sizes required for PCB 121, microcontroller 122, CISs 126 and 127, and tracking sensors 125, the entire physical footprint and sized dimensions of the scanner 100 can be smaller that the height of an average check and as wide as the widest available check; the tube's length can be smaller than the length of an average check. This is a significant savings over conventional check scanners with no mechanical components that can fail or jam when attempting to control the movement of the check.

As the media item/check is passed through infeed 130 into tube 140, and out outfeed 150 by a customer, front and rear surface images of the check are simultaneously captured by the CISs 126 and 127. The scanline image frames for each successive scanline captured is logically transposed based on the x and y translation and yaw angle delta since the previous scanline, and this positionally transposed scanline drawn into a virtual memory buffer in memory by processor 123 executing firmware 124.

The firmware instructions cause the processor 123 to perform operations that computationally transposition the image data based on lateral x and y movement and rotational yaw angle data. This permits a relatively low-specification microcontroller to be implemented as microcontroller 122 to perform the computations in real time. The firmware instructions also cause the processor 123 smooth linear transformation (e.g., scaling, rotation, etc.) to control aliasing. Furthermore, sampling at a higher resolution and down sampling the final check image can be used to reduce aliasing and improve image quality.

Depending on the yaw angle of the check when it is initially inserted into infeed 130, the resulting image of the check in memory can have the same yaw angle. If the check 210 is biased to one side of the infeed 130 when it is initially inserted, the resulting image in memory is also biased to one side. To account for this situation, approximately double the width of the maximum width check is available in the virtual image buffer to prevent a later part of the scanned image from falling outside the memory image buffer's area. Thus, for 300 ppi scan resolution, the memory image buffer is approximately 6.7 MP (mega pixels) for each side of the check (front and back).

Once the scan completes the logical image in the buffer can be processed using firmware instructions/operations associated with existing algorithms to logically deskew the image, optimize image quality (e.g., as regional contrast adjustments, etc.), and apply optical character recognition (OCR) for the check details and for the check MICR (magnetic ink character recognition) data. These processing steps after the scan completes can be implemented via the firmware instructions or offloaded and processed by a processor of a host device to the scanner 100, such as a media handling device or a transaction terminal.

The scan resolution across the width of the check is dictated by a resolution of the CIS 126 and 127 (typically, 300 ppi). In existing mechanical media transport scanners, the resolution along the length of the check is defined to be 300 ppi synchronized to a specific step size of the media transport.

In an embodiment, the virtual image buffer has a fixed resolution of 300 ppi vertically and 300 ppi horizontally, each CIS 126 and 127 reads at a maximum speed of 20 us/line, which equates to 50,000 scanlines/second, the transposed scanline data frames continuously write into relevant virtual pixels based on the computationally transposed position of the scanline data. For example, if a 225mm check were pulled rapidly in 225ms, then this equates to a media speed of 1 mm/ms, and at the CIS 126 and 127 50,000 scanlines/second, this equates to 50 scanlines/mm (1270 ppi) resolution. So, even if the check were pulled through rapidly, the physical vertical scan resolution would be at least 4.2 times higher than the 300 ppi virtual frame buffer. The scanline data overwrites a pixel if the pixel had not previously been written to, with subsequent writes to that pixel averaging with the existing data at the pixel. So, each virtual frame buffer pixel is typically the average of at least 4 sets of scanline data or more. This oversampling approach reduces aliasing.

In an embodiment, the tracking sensors 125 include one pair of sensors consisting of two sensors 125. In an embodiment, the tracking sensors 125 include two pairs of sensors consisting of 4 total sensors 125. Four sensors 125 permits reconstruction of a final check image in a worst-case orientation scenario which can occur when a narrowest check (66mm) is inserted into infeed 130 slot designed to accept 108mm wide checks, this ensures that at least two sensors 125 cover the check before it initially crosses under or leaves the CISs 126 and 127.

In an embodiment, the dimensions of the housing 110 and correspondingly the scanner 100 is 20 mm deep x 60 mm high x 108mm wide, Notice the width is the width of the widest available check, the length and depth are less than that width. As a result, substantial physical space savings and component parts savings can be realized by replacing check scanner components and modules of media handling devices with scanner 100. Furthermore, the operational up time of the media handling devices are substantially improved because with scanner 100 there are no mechanical components that can fail or cause a check jam.

FIG. 2 is a diagram of a front view of a valuable media item 210 passing over a scanline of the valuable media scanner, according to an example embodiment. The media item/check 210 is illustrated as entering the infeed slot at an angle that skews to the right. A right-bottom leading edge of the check 210 is about to cross the scanline 126A and 127A. This means that the right-bottom leading edge will be first to pass between the two CISs 126 and 127. A top pair of tracking sensors 125 and a bottom pair of tracking sensors 125 report x, y, and yaw movements to processor 123. The movements are reported to processor 123 before the leading edge passes the scanline 126A and 127A, as the leading edge is on the scanline 126A and 127A, and after the leading edge passed by the scanline 126A and 127A. This allows for precise and continuous tracking of the check movements and orientation by processor 123 for purposes of assembling image frames provided by the CISs 126 and 127 into the final check image as discussed above.

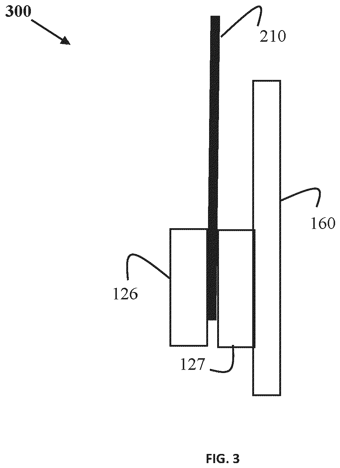

FIG. 3 is a diagram of side view of the valuable media item 210 passing between a front and a back camera 126 and 127 of the scanline 126A and 127A for the valuable media scanner 100, according to an example embodiment. CIS 126 and CIS 127 simultaneously capture front and rear surface image frames of the check 210 when the check 210 passed therebetween. The image frames are stored in a memory buffer and are continuously being assembled by processor 123 as discussed above based on movement data reported by tracking sensors 125. Notice that rear CIS 127 is mounted against a surface 160; again, the dimensions for the physical footprint of the scanner 100 are substantially less than conventional check scanners. In an embodiment, the surface 160 is a plate affixed to the housing, such that scanner 100 is mounted to housing 110.

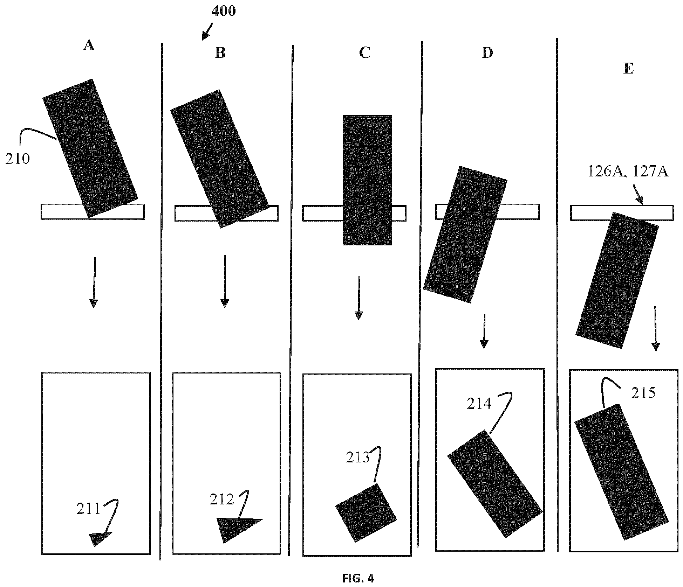

FIG. 4 is a diagram illustrating movements of the valuable media item 210 passing over the scanline 126A and 127A of the valuable media scanner 100 with reconstruction of image frames 211-215 captured for the valuable media item 210 and assembled into a complete and final image 215 of the valuable media item 210, according to an example embodiment. FIG. 4 illustrates movements over time for the check 210 to pass into infeed 130, through tube 140, and exit outfeed 150 all while under the control of the user/customer who is depositing and/or cashing a check at a transaction terminal.

At time A only a small portion of a bottom-left leading edge of the check 210 has passed over scanline 126A and 127A, the image frames 211 are retained in the memory buffer of scanner 100. At time B, a larger portion of check 210 has passed over scanline 126A and 127 such that the assembled image frames 212 is larger. At time C, still a larger portion of check 210 has passed over scanline 126A and 127A; as a result, image buffer includes even a larger portion of assembled image frames 213. This continues at time D with image frames 214 being assembled in the memory buffer until finally at time E, the resulting memory buffer includes a complete and final image 215 assembled from image frames 211-215. This is intended to be an example as it is noted that there can be thousands of image frames assembled, especially when the CISs 126 and 127 are 1 pixel CISs. Notably, all image frames captured from when the check 210 first crosses the scanline 126A and 127A unit it finally exits the scanner 100 by passing by the scanline 126A and 127A are used to assemble the final front surface and final back surface images of the check 210.

Notably, both the front surface of the check 210 and the back image of the check 210 are assembled from image frames simultaneously. Thus, the memory buffer at any point in time while the check 210 is passing over the scanline 126A and 127A includes two separate images being dynamically assembled one for the front surface of the check 210 and one for the back surface of the check 210.

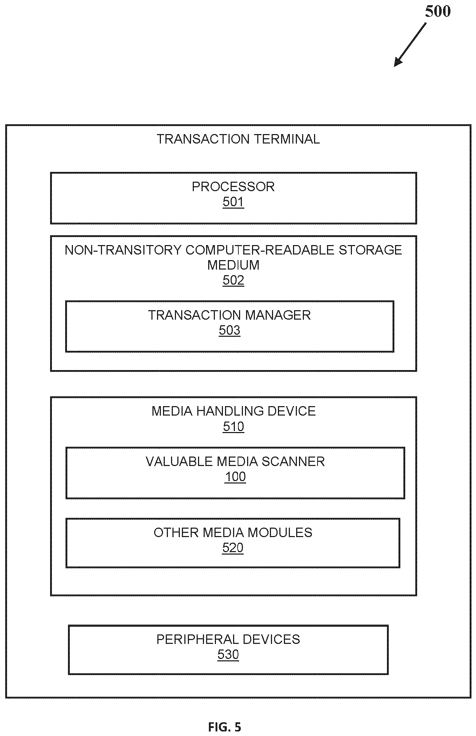

FIG. 5 is a diagram of a system 500 or a transaction terminal 500 that includes a valuable media handling device 510 with the valuable media scanner 100, according to an example embodiment. Again, components of terminal 500 are shown in simplified form with just those components necessary for comprehending the teachings presented. Notably, terminal 500 can include more or less components from what is illustrated without departing from the teachings presented herein.

Transaction terminal 500 includes a processor 501; medium 502, which includes instructions for a transaction manager 503; a media handling device 510, and peripheral devices 530. The instructions when executed by processor 501 cause processor 501 to perform operations discussed herein with respect to transaction manager 503.

Media handling device 510 is an integrated peripheral device of terminal 500. Media handling device 510 includes the valuable media scanner 100 and other media handling modules 520. For example, the other media handling modules 520 can include, by way of example only, an upper media transport module, a media deskew module, a media verification module, a media diverter module, a lower media transport module, an escrow module, a recycler module, media cassettes modules, etc.

The peripheral devices 530 include, by way of example only, a card reader peripheral, a print receipt peripheral, a touchscreen peripheral, a contactless card reader peripheral (e.g., a near field communication (NFC) transceiver), a bioptic scanner peripheral, a handheld scanner peripheral, a vertical scanner peripheral, a horizontal scanner peripheral, a weigh scale peripheral, a bag scale peripheral, a combined scanner-and-scale peripheral, one or more camera peripherals, etc. Again, the media handling device 510 is also an integrated peripheral of terminal 500.

In an embodiment, media handling device 510 is dispenser. In an embodiment, media handling device 510 is recycler.

Media handling device 510 includes scanner 100 as discussed above with FIGS. 1-4. The scanner 100 includes housing 110, PCB 121, infeed slot 130, tube 140, and outfeed slot 150. PCB 121 include a microcontroller 122, which includes processor 123 and firmware instructions 124 executed by processor 123 to cause the processor to perform operations associated with assembling images frames of a check 210 into a final front surface image and a final back surface image based on image frames provided by cameras 126 and 127 and movement data provided by sensors 125.

Transaction manager 503 performs media operations for customers by controlling media handling device 510. Media handling device 510 is connected and interfaced to PCB 121 of scanner 100. For example, when the terminal 500 is an automated teller machine (ATM) a customer can initiate a deposit media operation via a transaction interface of transaction manager 503. The transaction interface instructs the customer to deposit the check 210 by inserting the check 210 in any orientation (front or back) into infeed slot 130 of scanner 100 and take back the check 210 existing through outfeed slot 150 of scanner 100. As the check 210 passes over scanline 126A and 127A between CISs 126 and 127, scanner 100 assembles front and back images frames for the front and back surfaces of the check 210 within a memory buffer of scanner 100. Once the check 210 has completely had a trailing edge pass over the scanline 126A and 127A, a complete and final images of the front surface and back surface of the check are available from the media buffer. At this point, the front and back final images can be passed from PCB 121 to applications executing on a processor of media handling device 510 and/or terminal 500 for purposes of performing additional operations on the front and back images, such as reading MICR data, performing OCR on check information, performing signature validation on a backside of the check 210, improving the quality of the images, etc. The media handling device 510 and terminal 500 applications then complete verification on the check and either permit the customer to deposit the check into an account of the customer or cash the check at which point the media handling device 510 is instructed by transaction manager 503 to dispense currency back to the customer.

It is noted that the above example is one scenario for one deposit media operation or check cashing media operation. Other media operations can be processed on terminal 500 using scanner 100.

In an embodiment, the transaction terminal is a self-service terminal. In an embodiment, the transaction terminal 500 is a point-of-sale terminal. In an embodiment, the transaction terminal 500 is an automated teller machine.

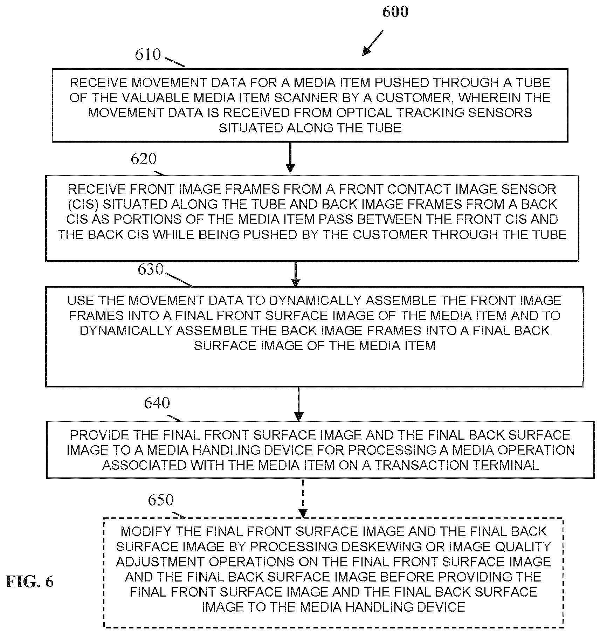

FIG. 6 is a diagram of a method 600 for operating the valuable media item scanner 100, according to an example embodiment. The software module(s) that implements the method 600 is referred to as "firmware." The firmware is implemented as executable instructions programmed and residing within memory and/or a non-transitory computer-readable (processor-readable) storage medium and executed by one or more processors of one or more devices. The processor(s) of the device(s) that executes the firmware are specifically configured and programmed to process the firmware. The firmware may or may not have access to one or more network connections during its processing. Any network connections used are wired, wireless, or a combination of wired and wireless.

In an embodiment, the device that executes the firmware is scanner 100. In an embodiment, the firmware is firmware 124.

At 610, the firmware receives movement data for a media item pushed through a tube 140 of a valuable media item scanner 100 by a customer. The movement data is received from optical tracking sensors 125 situated along the tube 140. The customer controls movement of the media item through the tube 140. The scanner 100 lacks any electromechanical components to urge or otherwise control the media item within the tube 140.

At 620, the firmware receives front image frames from a front CIS 126 situated along the tube 140. Furthermore, the firmware receives back image frames from a back CIS 127 as portions of the media item pass between the front CIS 126 and the back CIS 127 while being pushed and controlled by the customer through the tube 140.

At 630, the firmware uses the movement data to dynamically assemble the front image frames into a final front surface image of the media item and the firmware uses the movement data to dynamically assemble the back image frames into a final back surface image of the media item once a trailing edge of the media item has passed between the front CIS 126 and the back CIS 127. The final images are simultaneously processed in parallel with one another by the firmware.

At 640, the firmware provides the final front surface image and the final back surface image to a media handling device 510. The media handling device 510 is performing operations as instructed by a transaction terminal 500 for a media operation associated with the media item. For example, the media operation is a check being deposited or cashed by the customer at the terminal through a transaction interface of terminal 500.

In an embodiment, at 650, the firmware modifies the final front surface image and the final back surface image by processing deskewing operations and/or image quality adjustment operations on or against the final front surface image and the final back surface image before the final images are provided to the media handling device 510. In an embodiment, the firmware performs OCR operations on the final front surface image to obtain media item details (e.g., check details) and/or performs MICR operations on the final front surface image to obtain MICR details for the media item. The firmware provides the media item details and/or MICR details to the media handing device 510 with the final images.

It should be appreciated that where firmware/software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner. Furthermore, although the software modules are illustrated as executing on one piece of hardware, the software may be distributed over multiple processors or in any other convenient manner.

The above description is illustrative, and not restrictive. Other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A valuable media item scanner, comprising:
a printed circuit board (PCB) comprising a processor and firmware executed by the processor;
optical tracking sensors connected to the PCB;
contact image sensors (CISs) connected to the PCB; and
the firmware when executed by the processor cause the processor to perform operations comprising:
dynamically assembling a front surface image and a back surface image of a media item passed through a tube using image frames provided from the CISs along with media item movement data provided by the optical tracking sensors; and
providing the front surface image and the back surface image to a media handling device for a media operation being processed on a transaction terminal associated with the media item.

2. The valuable media item scanner of claim 1 further comprising:
a housing to encase or to include the PCB, the optical tracking sensors, and the CISs within the housing, wherein the housing further includes a media infeed slot connected to the tube, and a media outfeed slot connected to the tube.

3. The valuable media item scanner of claim 2, wherein the CISs include a first CIS and a second CIS situated on opposing sides of the tube to define a scanline within the tube.

4. The valuable media item scanner of claim 3, wherein the optical tracking sensors include a first pair of optical tracking sensors, the first pair horizontally aligned and situated vertically above the scanline along the tube; and optionally
wherein optical tracking sensors include a second pair of optical tracking sensors, the second pair vertically aligned and situated under the first pair and the second pair situated vertically below the scanline along the tube.

5. The valuable media item scanner of any one of claims 2 to 4, wherein the housing is approximately 20mm deep, 60 mm high, and 108mm wide.

6. The valuable media item scanner of any preceding claim, wherein the media item movement data includes lateral x, y, and rotational yaw data for the media item; and/or
wherein the firmware associated with the dynamically assembling further includes simultaneously dynamically assembling the front surface image and the back surface image.

7. The valuable media item scanner of any preceding claim, wherein the firmware associated with the dynamically assembling further includes assembling each portion of the front surface image and each portion of the back surface image within a memory buffer of the PCB; and optionally
wherein the firmware associated with the providing further includes deskewing the front surface image and the back surface image from the memory buffer and provide a deskewed front surface image and a deskewed back surface image for the media item to the media handling device.

8. A transaction terminal, comprising:
a media handling device comprising a valuable media item scanner;
the valuable media item scanner comprising:
a processor,
optical tracking sensors; and
contact image sensors (CISs);
wherein the processor is configured to use movement data obtained from the optical tracking sensors for a media item passing through a tube and image frames obtained from the CISs of the media item passing through the tube to dynamically assemble a final front surface image and a final back surface image of the media item, and wherein the processor is further configured to provide the final front surface image and the final back surface image of the media item to the media handling device during a media operation being processed by the transaction terminal.

9. The transaction terminal of claim 8, wherein the processor is further configured to modify the final front surface image and the final back surface image before providing to the media handling device by processing one or more of deskewing operations and image quality adjustment operations on the final front surface image and the final back surface image.

10. The transaction terminal of claim 8 or claim 9, wherein the processor is further configured to process optical character recognition (OCR) operations on the final front surface image and provide media item details obtained from the OCR operations to the media handling device; and optionally
wherein the processor is further configured to process magnetic ink character recognition (MICR) operations on the final front surface image and provide MICR data obtained from the MICR operations to the media handling device.

11. The transaction terminal of any one of claim 8 to 10, wherein the media item scanner further includes an infeed slot to receive the media item and outfeed slot to eject the media item, wherein the infeed slot is connected to a first end of the tube and the outfeed slot is connected to a second end of the tube, wherein a customer associated with the media operation inserts a leading edge of the media item into the infeed slot and pushes the media item through the tube out the outfeed slot.

12. The transaction terminal of any one of claims 8 to 11, wherein the media item scanner lacks any electromechanical components to control and to urge the media item through the tube.

13. The transaction terminal of any one of claim 8 to 12, wherein the CISs include a first CIS and a second CIS, the first CIS is situated on a first side of the tube and the second CIS is situated on a second and opposing side of the tube; and/or
the transaction terminal is an automated teller machine, a point-of-sale terminal, or a self-service terminal.

14. A method of operating a valuable media item scanner, comprising:
receiving movement data for a media item pushed through a tube of the valuable media item scanner by a customer, wherein the movement data is received from optical tracking sensors situated along the tube;
receiving front image frames from a front contact image sensor (CIS) situated along the tube and back image frames from a back CIS as portions of the media item pass between the front CIS and the back CIS while being pushed by the customer through the tube;
using the movement data to dynamically assemble the front image frames into a final front surface image of the media item and to dynamically assemble the back image frames into a final back surface image of the media item; and
providing the final front surface image and the final back surface image to a media handling device for processing a media operation associated with the media item on a transaction terminal.

15. The method of claim 14, wherein providing further includes modifying the final front surface image and the final back surface image by processing deskewing or image quality adjustment operations on the final front surface image and the final back surface image before providing the final front surface image and the final back surface image to the media handling device.
